# EUROPÄISCHE PATENTSCHRIFT

(11) **EP 0 417 425 B1**
(45) Veröffentlichungstag und Bekanntmachung des Hinweises auf die Patenterteilung: **21.09.1994**
(21) Anmeldenummer: 90113499.9
(22) Anmeldetag: 14.07.1990
(51) Int. Cl.: H04M 3/56

(54) **Verfahren zur Nachrichtenübertragung zwischen mehreren Teilnehmerstationen und dabei einsetzbare Teilnehmerstation**
Method for transmitting information between several user stations and user station for carrying out the method
Procédé de transmission d'informations entre plusieurs postes d'abonnés et poste d'abonné pour mettre en oeuvre le procédé.

(30) Priorität: 12.09.1989 CH 3326/89
(43) Veröffentlichungstag der Anmeldung: 20.03.1991
(73) Patentinhaber: SIEMENS-ALBIS AKTIENGESELLSCHAFT, 8047 Zürich (CH); SIEMENS AKTIENGESELLSCHAFT, 80333 München (DE)
(72) Erfinder: Grau, Alfred, CH-8047 Zürich (CH); Loder, Max, CH-8906 Bonstetten (CH); Küpfer, Hanspeter, CH-8903 Birmensdorf (CH)

(56) Entgegenhaltungen:
- EP-A- 0 078 714
- GB-A- 2 061 670
- US-A- 4 339 816

## Beschreibung

Die vorliegende Erfindung betrifft ein Verfahren gemäss dem Oberbegriff des Patentanspruchs 1 sowie eine Teilnehmerstation für eine nach diesem Verfahren betriebene Nachrichtenübertragungsanlage nach dem Oberbegriff des Patentanspruchs 11.

Aus der EP-B1-0 078 714 ist eine Nachrichtenübertragungsanlage bekannt, bei der Teilnehmerstationen über eine Zweidrahtleitung miteinander kommunizieren. Die Stationen werden galvanisch an die Leitung angeschlossen und die Informationsübertragung erfolgt auf einem frequenzmodulierten Träger, wobei für den Hin- und den Rückweg jeweils ein Paar von vorbestimmten Frequenzen verwendet wird. In dieser Anlage ist nebst dem Aufbau von Verbindungen zwischen zwei Partnern auch die Möglichkeit von Konferenzverbindungen, d.h. von gleichzeitigen Verbindungen zwischen mehr als zwei Partnern vorgesehen. Bei solchen Verbindungen erfolgt die Nachrichtenübertragung über die Zweidrahtleitung nicht im Trägerfrequenz-, sondern im unmodulierten Basisband. Daraus ergibt sich der Nachteil, dass ein Abhören von Konferenzgesprächen durch Unbefugte ohne weiteres mittels Anschalten einer eigenen Teilnehmerstation an die Leitung möglich ist. Ferner ist bei diesem Vorgehen nur eine Konferenz gleichzeitig möglich. Ein anderer Nachteil besteht darin, dass weitentfernte Konferenzteilnehmer leiser sind als näherliegende.

Davon ausgehend liegt der vorliegenden Erfindung die Aufgabe zugrunde, ein Verfahren der eingangs genannten Art sowie eine hierfür geeignete Teilnehmerstation anzugeben, die nicht nur die genannten Nachteile nicht aufweisen, sondern in einfacher Weise neben netzinternen auch netzübergreifende Zweier- und Konferenzverbindungen zulassen, und zwar sowohl für den Fall von leitungsgebundener als auch für den Fall drahtloser Nachrichtenübertragung. Die Lösung dieser Aufgabe gelingt mit den Massnahmen gemäss dem Kennzeichen des Patentanspruches 1 sowie mit einer Teilnehmerstation gemäss dem Patentanspruch 11. Vorteilhafte Weiterbildungen sind in weiteren Ansprüchen angegeben.

Die erfindungsgemässe Teilnehmerstation erlaubt nebst normalen Gesprächsverbindungen zwischen zwei Teilnehmern nicht nur den Aufbau von Konferenzverbindungen zwischen Teilnehmern eines Übertragungsnetzes in einer beliebigen Frequenzlage, sondern kann zudem unverändert als Netzübergangsstelle für Verbindungen zwischen zwei und mehr Teilnehmern verschiedener Übertragungsnetze eingesetzt werden. Damit erübrigt sich eine spezielle Schnittstelle bei netzübergreifenden Verbindungen. Bei leitungsgebundener Übertragung schliesst die induktive Ankopplung der Teilnehmerstationen an die Leitung eine Beschädigung der Leitungsadern aus, was gerade in Netzen mit häufig ihren Standort wechselnden Teilnehmern von Bedeutung ist. Weitere Vorteile der Erfindung aus der nachfolgenden Beschreibung ersichtlich.

Nachstehend wird die Erfindung anhand von Zeichnungen beispielsweise näher erläutert. Es zeigt :
- Fig. 1: den prinzipiellen Aufbau einer Nachrichtenübertragungsanlage mit über eine Zweidrahtleitung miteinander verbindbaren Teilnehmerstationen
- Fig. 2: den Aufbau einer Teilnehmerstation
- Fig. 3: das Prinzip für Wahl eines freien Kanals
- Fig. 4: das Prinzip für Konferenzverbindungen in der Nachrichtenübertragungsanlage
- Fig. 5, 6 und 7: das Prinzip für netzübergreifende Verbindungen.

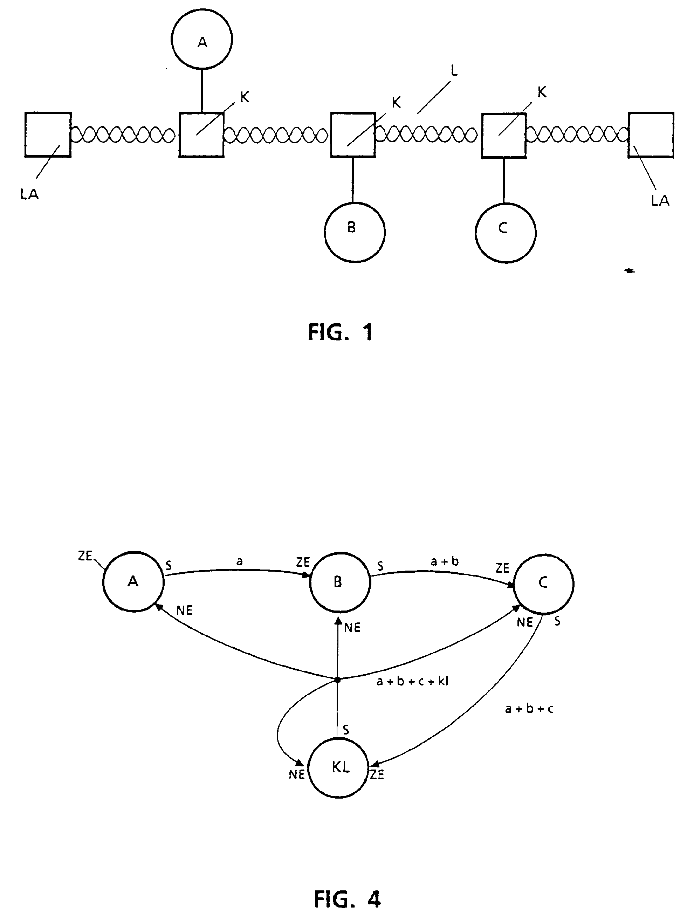

In Fig. 1 sind an einer verdrillten, beidseitig mit einem Leitungsabschluss LA abgeschlossenen Zweidrahtleitung L mehrere Teilnehmerstationen A, B, C angeschlossen, wobei deren Anzahl nicht auf drei beschränkt ist. Die Ankopplung der Teilnehmerstationen an die Leitung L erfolgt induktiv über ein Koppelelement K, das nach dem Transformatorprinzip ausgebildet ist. Die Teilnehmerstationen sind netz- oder batteriegespeist und weisen im wesentlichen ein Grundgerät mit einem Bedienteil und der Elektronik sowie einen Handapparat mit Mikrofon und Hörer (Mikrotel) auf. Einzelheiten dazu sind weiter unten beschrieben.

Die Nachrichtenübertragung zwischen den Stationen erfolgt mittels frequenzmodulierter Trägersignale über die Zweidrahtleitung L. Für eine normale Verbindung zwischen zwei Stationen wird ein Paar von Trägerfrequenzen belegt, d.h. je eine Frequenz für den Hin- und den Rückkanal. Wählt man dabei frequenzmässig nebeneinanderliegende Hin- und Rückkanäle, werden ähnliche Dämpfungen in beiden Übertragungsrichtungen einer Verbindung erzielt. Davon ausgehend, dass die Leitungsdämpfung mit zunehmender Trägerfrequenz im allgemeinen zunimmt, wird bei der Kanalwahl in noch näher zu beschreibender Weise immer der im Hinblick auf einen noch ausreichenden Empfangspegel des Trägersignals möglichst höchstfrequente Kanal belegt, so dass die tieffrequenten Kanäle für Verbindungen über relativ grosse Distanzen zur Verfügung stehen. Die Signalisierung zwischen den Stationen erfolgt nach dem bekannten FSK (frequency shift-keying) - Verfahren, d.h. zur Signalisierung wird eine bestimmte Trägerfrequenz entsprechend binären Signalisierungsinformationen (wie Rufsignal anschalten, Teilnehmernummern, Besetztinformationen etc.) moduliert. Die Trägerfrequenz des Signalisierungskanals kann z.B. unterhalb der für die erwähnten Kanäle verwendeten Trägerfrequenzen liegen. Der Signalisierungskanal arbeitet als Bussystem mit besonderer Zugriffsregelung, wie sie z.B. bei Ethernet verwendet wird. Das Bussystem wird von allen Stationen gemeinsam benützt. Bevor eine Station eine Meldung absenden kann, muss sie die Zugriffsberechtigung erlangen, indem sie das Übertragungsmedium abhört und feststellt, ob bereits eine Übertragung stattfindet. Wenn dies nicht der Fall ist, kann sie mit dem Senden beginnen. Nach Aussendung der Meldung wird der Signalisierungskanal wieder freigegeben, selbst wenn diese Station noch eine zweite Meldung zu senden hat. Damit soll eine zeitweilige Blockierung der Signalisierung verhindert werden. Ist der Signalisierungskanal hingegen nicht frei, wird der Sendeversuch abgebrochen und der Zugriff nach einer bestimmten Zeitspanne wiederholt.

Eine Meldung (Telegramm) umfasst die im Rahmen einer Signalisierung notwendigen Informationen, wie Länge der Meldung, Art und Inhalt der Meldung (z.B. Anruf, Rückfrage, Auslösen etc,) die Empfängernummer (Rufnummer der Station) und die Absendernummer.

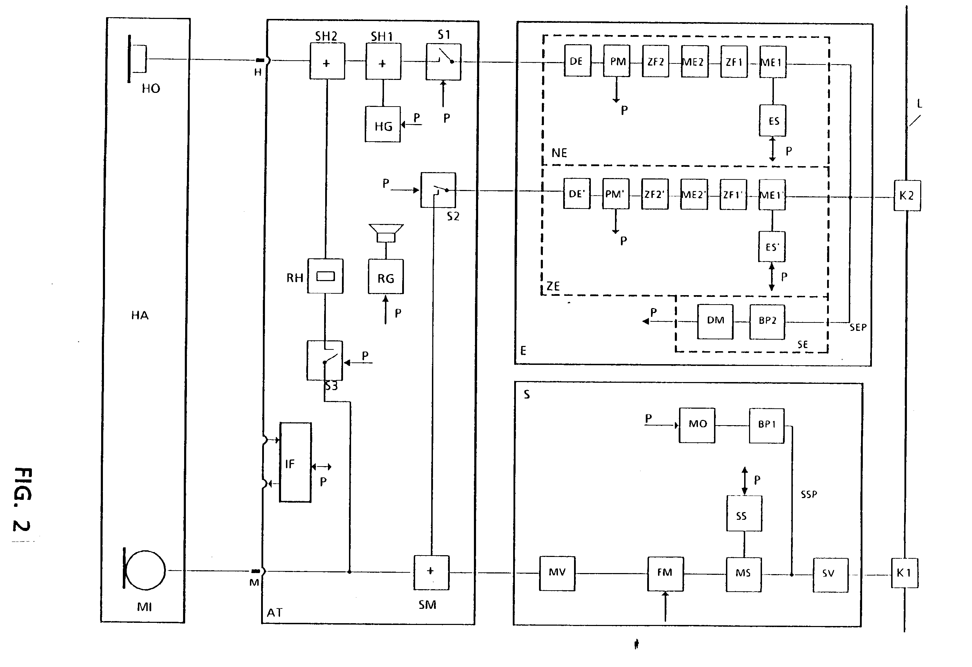

Fig. 2 zeigt in einem Blockschaltbild die im Zusammenhang mit der Erfindung wesentlichen Teile einer in dieser Nachrichtenübertragungsanlage einsetzbaren Teilnehmerstation. Diese weist einen in an sich bekannter Weise aufgebauten Sendeteil S auf, dessen Ausgang über ein induktives Koppelelement K1 an die Leitung L anschliessbar ist. Ein Empfangsteil E weist nebst dem üblichen Empfänger NE noch einen im Aufbau identischen zweiten Empfänger, im folgenden Zusatzempfänger ZE genannt, auf. Die Eingänge der beiden ebenfalls in an sich bekannter Weise nach dem Prinzip des Überlagerungsempfängers (Superhet) aufgebauten Empfänger NE, ZE sind gemeinsam über ein induktives Koppelelement K2 an die Leitung L anschliessbar. Am Eingang des Empfangsteiles E und am Ausgang des Sendeteiles S ist ferner noch ein Signalisierempfangs- SEP bzw. ein Signalisiersendepfad SSP angeschlossen. Die Steuerung aller Vermittlungsabläufe in der Teilnehmerstation übernimmt eine nicht gezeichnete programmierbare Steuereinrichtung mit einem Mikroprozessor. Alle durch die Steuereinrichtung gesteuerten Teile der Station sind in Fig. 2 mit einem mit P bezeichneten Pfeil versehen. Die Pfeilrichtung kennzeichnet den Signalfluss von der bzw. zur Steuereinrichtung. Der Ausgang des Empfängers NE ist über einen Schalter S1 mit dem Hörer HO im Mikrotel HA der Station verbindbar. Der Ausgang des Zusatzempfängers ZE ist über einen Schalter S2 mit einem Addierglied SM verbindbar, dessen anderer Eingang mit dem Mikrofon MI und dessen Ausgang mit dem Eingang des Sendeteils S verbunden ist.

Über den Signalisiersendepfad SSP wird beim Aufbau einer Verbindung der Gesprächspartner zunächst gerufen. Ein FSK-Modulator MO setzt dabei die von der Steuereinrichtung erhaltenen Informationen in ein FSK-Signal mit bestimmter Mittenfrequenz um. Nach der Bandbegrenzung in einem nachfolgenden Bandpass BP1 gelangt das Signalisierungssignal an den Eingang eines Sendeverstärkers SV, der es auf die Leitung L gibt.

Auf der Empfangsseite gelangt das Signalisierungssignal von der Leitung L über ein Empfangsbandfilter BP2 zum FSK-Demodulator DM, von wo die demodulierten Informationen an die Steuereinrichtung weitergegeben werden. Der Signalisierungsempfänger SE ist die einzige Einheit in der Station, die ständig in Betrieb ist. Sobald er eine Signalisierinformation empfängt, aktiviert er die Steuereinrichtung, welche die übrigen Einheiten der Station zur Betriebsaufnahme veranlasst und dei eintreffenden Signalisierinformationen verarbeitet.

Zum Aufbau einer Verbindung hebt der rufende Teilnehmer seinen Handapparat ab oder schaltet seine Station ein und gibt nach Empfang des Wähltones die Rufnummer des zu rufenden Teilnehmers ein. Diese wird in einer Anrufmeldung über den Signalisierungskanal zur betreffenden Station übertragen. Die Station meldet hierauf ihren Zustand. Ist sie frei, d.h. nicht belegt, veranlasst die rufende Station die Suche eines geeigneten freien Übertrangungskanals aufzunehmen. Dabei beginnt sie mit dem höchstfrequenten noch freien Übertragungskanal, indem sie die entsprechende Trägerfrequenz aussendet, welche im Empfänger NE der gerufenen Station empfangen und in einer Begrenzer- und Messschaltung PM hinsichtlich ihres Empfangspegels überprüft wird. Mit Hilfe ihrer Messschaltung PM ermittelt die einen freien Kanal suchende Station jeweils die verfügbaren, d.h. noch nicht belegten Kanäle. Die Auswertung des Messergebnisses erfolgt in der Steuereinrichtung. Lässt der Empfangspegel auf einem geprüften Kanal genügende Verständlichkeit zu, erfolgt über den Signalisierungskanal eine entsprechende Rückmeldung zur rufenden Station und der Kanal gilt als belegt. Andernfalls wird der Suchvorgang für die nächsttiefere noch freie Trägerfrequenz wiederholt. Nach Festlegung des Vorwärtskanals ermittelt die gerufene Station in gleicher Weise den Rückkanal, wiederum ausgehend von der höchsten noch freien Kanalfrequenz. Stehen beide Kanäle fest, wird die gewünschte Station gerufen. Sobald sich der gerufene Teilnehmer meldet, ist der Verbindungsaufbau beendet und das Gespräch zwischen den beiden Teilnehmern kann beginnen.

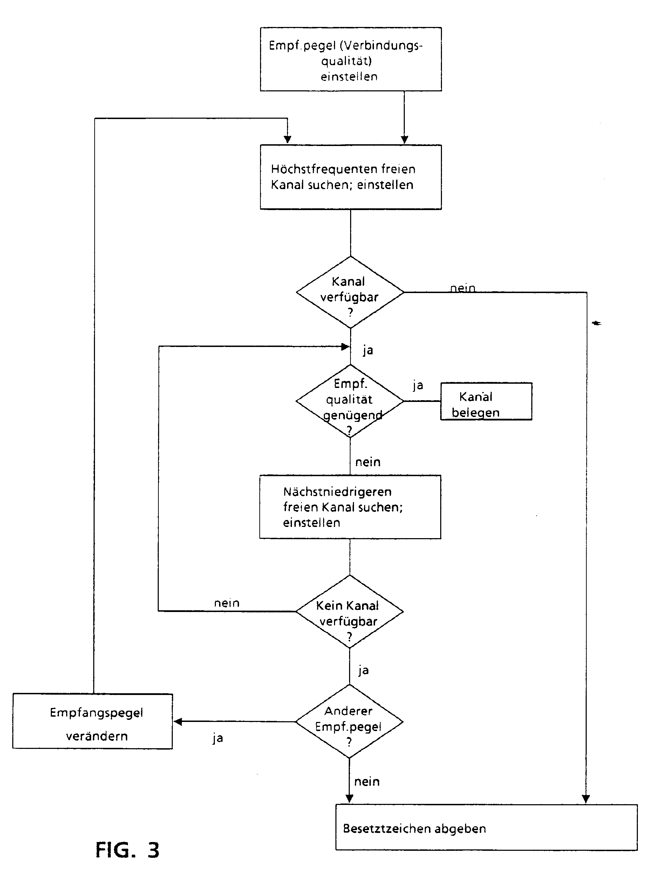

Der Ablauf für die Suche und Wahl eines freien Kanals ist in Fig. 3 in einem Flussdiagramm verdeutlicht. Vor Beginn einer Kanalsuche wird ein Wert für einen bestimmten Empfangspegel festgelegt, der die Qualität der aufzubauenden Verbindung bestimmt. Die Messschaltung PM liefert jeweils eine zum tatsächlichen Empfangspegel proportionale Messgrösse, die in der Steuereinrichtung mit dem vorgegebenen Wert verglichen wird. Im Diagramm ist noch eine vorteilhafte Weiterbildung angegeben, bei der nicht nur ein, sondern mehrere unterschiedliche Empfangspegel in die Kanalsuche einbezogen werden. Wenn bei einem festgelegten ersten Empfangspegel kein geeigneter freier Kanal gefunden werden kann, wird ein weiterer, z.B. reduzierter, aber bezüglich Verständlichkeit noch immer genügender Empfangspegel eingestellt und die Kanalwahl - wiederum beginnend mit dem höchstfrequenten freien Kanal - wiederholt. Erst wenn nach dem Einstellen aller in Betracht kommenden Empfangspegel kein Vorwärts- oder kein Rückkanal gefunden wird, wird dem rufenden Teilnehmer eine Besetztsignalisierung zugeleitet.

Im Gesprächszustand gelangt sendeseitig das Mikrofonsignal auf einen Mikrophonverstärker MV und dann auf einen Frequenzmodulator FM. Die Pegelverhältnisse sind so gewählt, dass bei maximalem Signal des Mikrophons ein bestimmter FM-Hub resultiert. Ein anschliessender nicht gezeichneter Bandpass sorgt für die notwendige Bandbegrenzung des an sich frequenzmässig unendlich ausgedehnten FM-Spektrums. Der nachfolgende Mischer MS setzt das FM-Signal mittels eines Sendesynthesizers SS auf den zutreffenden Sprechkanal um. Darauf durchläuft das Sendesignal den Sendeverstärker SV, von wo es auf die Leitung L gelangt.

Bei einer Zweierverbindung, d.h. einer Verbindung zwischen nur zwei Teilnehmern gelangt empfangsseitig nur der Empfänger NE zum Einsatz. Der Zusatzempfänger ZE bleibt inaktiv, er wird nur bei Verbindungen mit mehr als zwei Teilnehmern, d.h. bei Konferenzverbindungen eingeschaltet. Das Empfangssignal gelangt von der Leitung L zum Empfänger NE. Mit einem Empfangssynthesizer ES wird der gewählte Sprechkanal in einem ersten Mischer ME1 in die 1. Zwischenfrequenzlage gemischt (unteres Seitenband). Ein nachfolgendes erstes ZF-Filter ZF1 hat primär die Aufgabe, den Träger des Empfangssynthesizers ES und das obere Seitenband vom zweiten Mischer ME2 fernzuhalten. Der zweite Mischer ME2 setzt das Signal in die 2. ZF um. Ein anschliessendes zweites ZF-Filter ZF2 nimmt die eigentliche Kanalselektion vor. Die Begrenzermesschaltung PM unterdrückt die durch die Bandbegrenzung entstandene Amplitudenmodulation. Zusätzlich beinhaltet sie eine analoge Pegelmesseinrichtung, deren Messergebnis digitalgewandelt der Steuereinrichtung zugeführt und dort für die Sprechkanalwahl verwendet wird. Anschliessend folgt der FM-Detektor DE.

In einem Audioteil AT wird das über den Schalter S1 vom FM-Detektor DE gelieferte Sprachsignal im Basisband pegelmässig an den Hörer HO angepasst. Der Schalter S1 wird jeweils erst geschlossen, wenn die Kanalsuche beendet ist. ein Hinweistongenerator HG liefert die Hinweistonsignale (Wählton, Besetztton etc.), welche über ein Additionsglied SH1 dem Sprachsignal überlagert werden. Da in dieser Konfiguration alle Zweierverbindungen 4-Drahtverbindungen sind und nirgends ein Übergang von 4-Draht auf 2-Draht stattfindet, fehlt das Rückhören. Da dies der Benützer als störend empfinden würde, ist ein über einen Schalter S3 schaltbarer Rückhörpfad RH vorhanden, der über ein weiteres Additionsglied SH2 ebenfalls dem empfangenen Sprachsignal überlagert wird. Die Lautstärke im Hörer HO kann in mehreren Stufen über die Tastatur des Bedienteils eingestellt werden. Das Signal zum Rufen der Station wird von einem Rufgenerator RG geliefert.

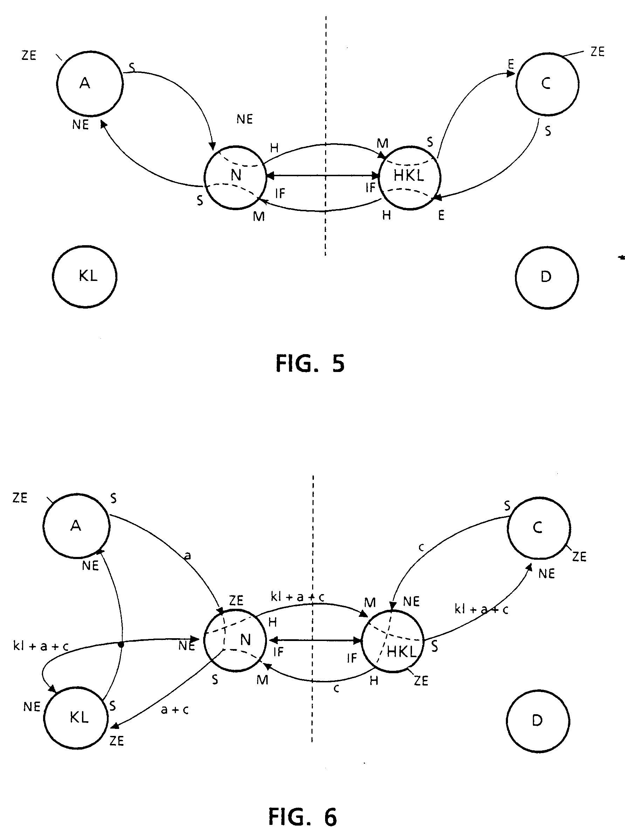

Fig. 4 zeigt das Prinzip einer in einer Nachrichtenübertragungsanlage gemäss Fig. 1 aufgebauten Konferenzverbindung, an der mehrere Teilnehmerstationen A, B, C und KL der eben beschriebenen Art beteiligt sind. Eine Konferenz wird aus einer Rückfrageverbindung zu dem in die Konferenz aufzunehmenden Teilnehmer eingeleitet. Der die Konferenz einberufende Teilnehmer baut dabei die Rückfrage aus einer normalen Zweierverbindung heraus auf. Der Aufbau der Rückfrageverbindung verläuft prinzipiell gleich wie der einer normalen Zweierverbindung. Zunächst bestehe eine normale Zweierverbindung zwischen den Stationen A und KL. Soll nun auf Veranlassung der Station KL noch Station B zwecks Konferenz in die Verbindung einbezogen werden, baut die Station KL zunächst eine Rückfrageverbindung zur Station B auf. Voraussetzung dazu ist die Verfügbarkeit je eines geeigneten Vorwärts- und Rückkanals. Die Station A bleibt während der Rückfrage in einem Wartezustand, in welchem sie keine Anrufe entgegennehmen kann. Während des Aufbaus der Rückfrage wird auch die Nummer der wartenden Station A zur rückgefragten Station B übermittelt. Sobald sich die Station B gemeldet hat, betätigt der Teilnehmer KL an seiner Station die Konferenztaste, worauf der Sendekanal ausgeschaltet und ein freier Summenkanal für das - wie weiter unten noch gegebenenfalls durch die Station KL bebildete Summensignal a + b + kl gesucht und gegebenenfalls durch die Station KL belegt wird. Hierauf meldet die Station KL die Nummer des Summenkanals an die Station B, welche ihrerseits die Nummer des Summenkanals an die Station A meldet. Die Rufnummer der Station A ist der Station B im Laufe der Rückfrage von der Station KL gemeldet worden. Die Station A sucht und belegt einen freien Sendekanal zur Station B. Der Empfänger NE der Station B wird auf den Summenkanal und deren Empfänger ZE auf den Sendekanal der Station A eingestellt. Ebenso stellt die Station A ihren Empfänger NE auf den Summenkanal ein und meldet der Station B, dass sie bereit ist. Schliesslich stellt die Station KL ihren Zusatzempänger ZE auf den Sendekanal der Station B ein. Hierauf werden die Verbindungen zwischen den Stationen A und B bzw. B und KL aktiviert, wobei letztere ihren Empfänger NE auch auf den Summenkanal einstellt. Damit ist die gewünschte Konferenz zwischen den drei Teilnehmern A, KL und B zustandegekommen. Der die Konferenz einleitende Teilnehmer KL wird zum Konferenzleiter. In gleicher Weise kann er weitere Teilnehmer, wie z. B. den Teilnehmer C in die Konferenzverbindung aufnehmen. Dabei geht er zunächst wiederum in Rückfrage zum Teilnehmer C, wobei der jüngste Konferenzteilnehmer B in den Wartezustand versetzt wird. Das Betätigen der Konferenztaste löst jeweils alle bis zum Eintreten eines gewünschten Teilnehmers in die Konferenzverbindung notwendigen Prozeduren aus.

Neu in eine Konferenzverbindung aufzunehmende Teilnehmerstationen werden in der Reihenfolge ihres Eintretens in die in Fig. 4 gezeigte Übertragungskette zwischen die jeweils letzte (jüngste) in die Konferenz aufgenommene Station und die die Konferenz einberufende Station KL eingefügt. In Fig. 4 würde eine weitere in die Konferenz aufzunehmende nichtgezeichnete Station D demnach zwischen die Stationen C und KL eingefügt. Dabei wird jeweils dem Zusatzempfänger ZE einer neu hinzukommenden Teilnehmerstation B das Sendesignal a der vorausgehenden Teilnehmerstation A zugeführt. Das empfangene Sendesignal a wird in der Teilnehmerstation B zum eigenen Gesprächssignal b hinzuaddiert und das Summensignal a + b nur nächstfolgenden Teilnehmerstation C gesendet. Diese empfängt es wiederum in ihrem Zusatzempfänger ZE und bildet ein Summensignal a + b + c, das auf den Zusatzempfänger ZE der die Konferenz einberufenden Teilnehmerstation KL gelangt. Das in der Station KL gebildete Summensignal a + b + c + kl wird nun auf den eigenen Empfänger NE sowie auf den Empfänger NE aller anderen Stationen A, B, C geleitet, von wo es dann auf den Hörer H dieser Stationen gelangt. Für das von der Station KL abgegebene Summensignal a + b + c + kl wird bei der Wahl des Summenkanals im Gegensatz zur zuvor beschriebenen Kanalwahl gemäss Fig. 3 eine möglichst tiefe Trägerfrequenz gesucht, damit auch zwischen weiter voneinander entfernten Stationen keine die Verständigung ungünstig beeinflussende Dämpfung eintritt. Der Zusatzempfänger ZE der ersten Station A der Übertragungskette bleibt inaktiv. Die Überlagerung bzw. Summierung des in einer Teilnehmerstation empfangenen Signals mit ihrem eigenen Signal erfolgt jeweils im unmodulierten Basisband. Dies geschieht über den durch die Steuereinrichtung gesteuerten Schalter S2 (Fig. 2), der das vom Demodulator DE′ am Ausgang des Zusatzempfängers ZE abgegebene Signal zum Addierglied SM leitet, wo es dem Mikrofonsignal überlagert wird. Das im Addierglied SM gebildete Summensignal gelangt dann zum Sendeteil S, wo es einer in beschriebener Weise ausgewählten Trägerfrequenz aufmoduliert und an die Leitung L abgegeben wird. Jedem von einer Teilnehmerstation abgegebenen Summensignal wird eine separate Trägerfrequenz zugeordnet. Die Anzahl der maximal an eine Konferenz anschaltbaren Stationen entspricht der Anzahl der zur Verfügung stehenden Trägerfrequenzen.

Will ein an einer Konferenz beteiligter Teilnehmer, in Fig. 4 z.B. der Teilnehmer C die Konferenz verlassen, betätigt er eine entsprechende Taste an seiner Station. Daraufhin meldet die Station C der in der Kette folgenden Station, im vorliegenden Fall der Station KL die Rufnummer der in der Kette vor ihr liegenden Station B. Nach Empfang dieser Rufnummer signalisiert die Station KL der Station B eine Meldung "Konferenzkette schliessen", d.h. zwischen den Stationen B und KL muss eine Verbindung aufgebaut werden. Demzufolge wird zwischen den Stationen B und KL ein geeigneter freier Kanal gesucht und gegebenenfalls zwischen dem Senderausgang der Station B und dem Eingang des Zusatzempfängers ZE der Station KL aktiviert. Das von der Station KL erzeugte Summensignal a + b + kl wird dann nur noch den Stationen A und B zugeführt und die Station C gelangt in den Freizustand.

Scheitert der Verbindungsaufbau zwischen den Stationen KL und B, so kann vorgesehen werden, eine Verbindung zwischen der Station KL und der Station A aufzubauen. Damit ist gewährleistet, dass die Konferenzverbindung nach dem Austreten eines Teilnehmers trotz allfälliger Schwierigkeiten nicht vollständig ausfällt, sondern wenigstens teilweise - im vorliegenden Beispiel zwischen den Teilnehmern A, KL und weiteren nicht erwähnten Teilnehmern - aufrechterhalten bleibt.

In Fig. 5, 6 und 7 sind die Verhältnisse bei netzübergreifenden Verbindungen (Zweier- bzw. Konferenzverbindung) dargestellt. Die an einer Verbindung beteiligten Teilnehmer befinden sich also in verschiedenen Nachrichtennetzen. In den gezeigten gehören die Teilnehmerstationen A und KL einem ersten Netz, dem Ursprungsnetz, und die Teilnehmerstationen C und D einem zweiten Netz, dem fremden Netz an. Als Übergang zwischen den beiden Netzen dienen zwei unbediente, d.h. teilnehmerlose Teilnehmerstationen N und HKL, deren Höreranschluss H jeweils mit dem Mikrofonanschluss M der anderen Station verbunden ist. Die beiden Übergangsstationen N, HKL verhalten sich wie normal von einem Teil nehmer bediente Stationen und entsprechen in ihrem Aufbau Fig. 2. Alle Teilnehmerstationen weisen ferner eine mit der Steuereinrichtung verbundene Hilfsschnittstelle IF, z.B. eine bidirektionale serielle Schnittstelle auf, über die sie beim Einsatz als Übergangsstation zur Übermittlung der für den netzübergreifenden Betrieb notwendigen Vermittlungsdaten miteinander verbunden sind. Diese Daten umfassen Signalisierinformationen für den Verbindungsaufbau sowie Informationen über Systemzustandswechsel. Empfangene Meldungen werden als Tastaturereignisse verarbeitet, d.h. über die Hilfsschnittstelle IF in einer Übergangsstation eintreffende Signalisierinformationen werden durch die Steuereinrichtung in gleicher Weise verarbeitet, wie wenn sie vom Bediener einer normal betriebenen Teilnehmerstation über deren Tastatur eingegeben worden wären. Dadurch ist die Fernsteuerung der Übergangsstation HKL durch die Übergangsstation N in den Anordnungen gemäss Fig. 5, 6, und 7 möglich.

Der Aufbau einer netzübergreifenden Verbindung zwischen zwei Teilnehmern wird nachfolgend anhand von Fig. 5 erläutert. Der Teilnehmer A des Ursprungsnetzes will dabei ein Gespräch mit dem Teilnehmer C des fremden Netzes aufnehmen. Er wählt nach Einschalten seiner Station zunächst die Nummer des Teilnehmers C. Diese Rufnummer hat einen ersten den betreffenden Netzübergang kennzeichnenden Teil und einen zweiten die gewünschte Station im fremden Netz kennzeichnenden Teil. Zunächst wird wie zuvor beschrieben eine Verbindung zwischen dem Teilnehmer A und der Übergangsstation N aufgebaut und die Übergangsstation N gerufen, welche infolgedessen über die Hilsschnittstelle IF die Übergangsstation HKL des fremden Netzes aktiviert. Die Übergangsstation HKL meldet ihre Bereitschaft an die Übergangsstation N durch Rücksenden des Wähltones, welcher dann zur rufenden Station A gelangt. Hierauf werden die vom Teilnehmer A gewählten, den Teilnehmer C kennzeichnenden Ziffern an die Übergangsstation N übertragen. Dies gibt sie über die Hilfsschnittstelle IF an die Übergangsstation HKL weiter, worauf der Wählton abgeschaltet wird. Die Übergangsstation HKL verwendet die Ziffern dann für einen selbsttätigen normalen Verbindungsaufbau zum Teilnehmer C im fremden Netz. Sobald der Teilnehmer C sich meldet, geht auch die Verbindung zwischen der Übergangsstation HKL und dem Teilnehmer C in den Sprechzustand über und das Gespräch zwischen den beiden Teilnehmern kann beginnen. Wäre der zu rufende Teilnehmer C in einem anderen fremden Netz, das über das gezeigte fremde Netz erreichbar ist, würde der Verbindungsaufbau wie beschrieben über einen weiteren Übergang, der die beiden fremden Netze miteinander verbindet, verlaufen.

In Fig. 6 ist eine Verbindung gezeigt, bei der ein Teilnehmer C eines fremden Netzes mit Teilnehmern A und KL eines Ursprungsnetzes zu einer Konferenz zusammengeschaltet ist. Zunächst bestehe eine normale Zweierverbindung zwischen den Teilnehmern A und KL. Die Teilnehmer A und KL können gleichen oder verschiedenen Netzen angehören. Wenn nun der Teilnehmer KL den Teilnehmer C in eine Dreierkonferenz einbeziehen will, tritt er aus der Verbindung mit seinem Partner A aus und baut eine netzübergreifende Rückfrageverbindung zum Teilnehmer C auf. Dabei wird die Verbindung zum Partner A in einen Wartezustand vesetzt. Nach dem Zustandekommen der Rückfrageverbindung betätigt der Teilnehmer KL seine Konferenztaste. Hierauf schaltet die Station KL ihren Sendekanal in der Rückfrageverbindung aus, sucht einen freien Summenkanal und belegt diesen. Hierauf meldet sie die Nummer des Summenkanals an die Übergangsstation N, welche ihrerseits die Nummer des Summenkanals an die Station A meldet. Die Rufnummer der Station A ist der Übergangsstation N im Laufe der Rückfrage von der Station KL gemeldet worden. Der Empfänger NE der Station N wird nun auf den Summenkanal eingestellt. Ebenso stellt die Station A ihren Empfänger NE auf den Summenkanal ein und meldet der Übergangsstation N, dass sie bereit ist. Ferner stellt die Station KL ihren Zusatzempänger ZE auf den Sendekanal der Station N ein. Hierauf werden die Verbindungen zwischen den Stationen A und N bzw. N und KL aufgebaut, wobei letztere ihren Empfänger NE auch auf den Summenkanal einstellt. Damit ist die gewünschte Konferenz zwischen den drei Teilnehmern A, KL und C hergestellt.

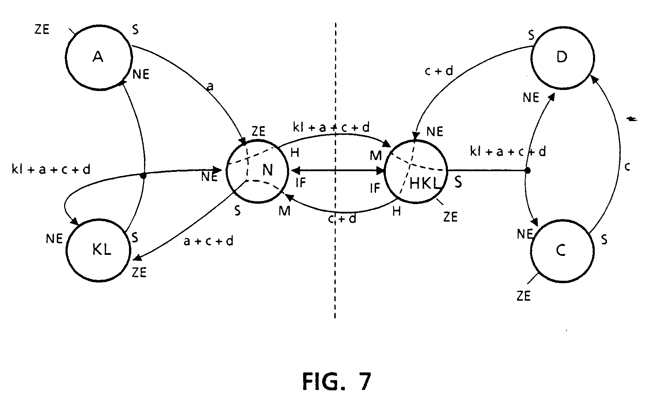

Fig. 7 zeigt eine netzübergreifende Konferenzverbindung, bei der wiederum zwei Teilnehmerstationen als Übergangsstationen N, HKL eingesetzt und wie beschrieben miteinander verbunden sind. Im Gegensatz zu Fig. 6 sind hier zwei Teilnehmerstationen C und D eines fremden Netzes in eine Konferenz mit den Stationen A und KL einbezogen. Die Übergangsstation N ist dabei gemäss dem anhand von Fig.4 beschriebenen Prinzip mit den Stationen A und KL des Ursprungsnetzes in einer Konferenz zusammengeschaltet. Sie verarbeitet das Nachrichtensignal wie eine normal von einem Teilnehmer bediente Station. Das von ihrem Empfänger NE empfangene Summensignal kl + a + c + d gelangt demoduliert auf ihren Höreranschluss H und von dort zum Mikrofonanschluss M der Übergangsstation HKL im fremden Netz. Ferner wird in der Übergangsstation N das Summensignal a + c + d gebildet, welches sich aus dem im eigenen Zusatzempfänger ZE empfangenen Signal a und dem über den Mikrofonanschluss M aus dem fremden Netz eintreffenden Summensignal c + d zusammensetzt. Die Übergangsstation HKL wirkt als Hilfskonferenzleiter, der ferngesteuert die Konferenzleitung im fremden Netz ausübt. Sie sendet als Summensignal das im Basisband aus dem Ursprungsnetz eintreffende Nachrichtensignal a + c + d + kl zum fremden Netz, welches Summensignal auf den Empfänger NE aller beteiligten Stationen C, D des fremden Netzes gelangt. Über ihren Höreranschluss H gibt sie das in ihrem Empfänger NE empfangene Summensignal c + d demoduliert auf den Mikrofonanschluss M der Station N im Ursprungsnetz. Der Aufbau einer solchen Konferenz erfolgt prinzipiell gleich wie anhand von Fig. 6 beschrieben, indem schrittweise zunächst eine der beiden Stationen C, D und anschliessend aus einer Rückfrage heraus die andere Station C,D in die Konferenzverbindung einbezogen werden.

Die Anwendung der Erfindung ist nicht auf den zuvor ausführlich beschriebenen Fall der leitungsgebundenen Nachrichtenübertragung zwischen den Teilenhmerstationen beschränkt. Sie ist prinzipiell ohne weiteres auch bei drahtloser Übertragung (Funk) einsetzbar, wobei die Teilnehmerstationen sowohl sende- als auch empfangsseitig an eine Antenne angeschlossen werden und entsprechend geeignete Trägerfrequenzen für die Übertragungskanäle und den Signalisierungskanal vorzusehen sind.

## Patentansprüche

1. Verfahren zur Nachrichtenübertragung zwischen mehreren Teilnehmerstationen (A, B ....), wobei die Übertragung der Nutzinformation zwischen den Teilnehmerstationen mittels modulierten Trägersignalen erfolgt, **dadurch gekennzeichnet,** dass beim Aufbau einer Verbindung zur gleichzeitigen Kommunikation zwischen mehr als zwei Teilnehmerstationen eine aus den beteiligten Teilnehmerstationen (A, B, C, ...., KL) bestehende Übertragungskette gebildet wird, in der mit Ausnahme der ersten Teilnehmerstation (A) jeder Teilnehmerstation (B, C, ...., KL) das Nutzsignal der vorangehenden Teilnehmerstation zugeführt, dort zum eigenen Nutzsignal addiert und das entstehende Summensignal an die in der Kette nächstfolgende Teilnehmerstation weitergegeben wird, dass das in der letzten Teilnehmerstation (KL) der Kette entstehende Summensignal allen an der Verbindung beteiligten Teilnehmerstationen (A, B, C, ...., KL) zugeführt wird, und dass zur Übertragung der Nutzsignale zwischen den Teilnehmerstationen und des allen Teilnehmerstationen zugeführten Summensignals je eine der zur Verfügung stehenden Trägerfrequenzen verwendet wird.

2. Verfahren nach Anspruch 1, **dadurch gekennzeichnet,** dass beim Aufbau einer gleichzeitigen Verbindung zwischen mehr als zwei Teilnehmerstationen, von denen ein Teil (A, KL) einen ersten Übertragungsnetz und ein Teil (C, D) einem zweiten Übertragungsnetz angehören, zunächst in dem Netz, von dem aus die Mehrfachverbindung aufgebaut wird, wiederum eine aus den beteiligten Teilnehmerstationen (A, KL) dieses Netzes bestehende Übertragungskette gebildet wird, wobei zusätzlich in diese Kette eine Teilnehmerstation als Netzübergangsstelle (N) eingefügt wird, dass diese zusätzliche Teilnehmerstation mit einer ebenfalls als Netzübergangsstelle (HKL) vorgesehenen zusätzlichen Teilnehmerstation des anderen Netzes durch Verbinden ihres Empfängerausgangs mit deren Sendereingang und ihres Sendereingangs mit deren Empfängerausgang sowie über eine Datenverbindung (IF) gekoppelt wird, und dass mit den an der Verbindung beteiligten Teilnehmerstationen (C,D) des zweiten Netzes ebenfalls eine die Netzübergangsstelle (HKL) enthaltende Übertragungskette gebildet wird.

3. Verfahren nach Anspruch 1 oder 2, **dadurch gekennzeichnet,** dass zur Aufnahme einer Teilnehmerstation (B) in eine Konferenzverbindung zunächst eine Rückfrageverbindung zu dieser Teilnehmerstation (B) aufgebaut und anschliessend die Teilnehmerstation (B) zwischen die die Konferenz einberufende Teilnehmerstation (KL) und die in der Übertragungskette davor liegende Teilnehmerstation (A) in die Übertragungskette eingefügt wird.

4. Verfahren nach Anspruch 1, 2 oder 3, **dadurch gekennzeichnet,** dass in den Teilnehmerstationen die Addition des von der vorangehenden Teilnehmerstation empfangenen und des eigenen Nutzsignals im Basisfrequenzband erfolgt.

5. Verfahren nach einem der vorangehenden Ansprüche, **dadurch** **gekennzeichnet,** dass die Wahl der Trägerfrequenzen für die Nutzsignalübertragung zwischen den Teilnehmerstationen unter Berücksichtigung der zulässigen Leitungsdämpfung erfolgt.

6. Verfahren Anspruch 5, **dadurch gekennzeichnet,** dass für die Übertragung des in der letzten Teilnehmerstation einer Kette erzeugten Summensignals zu allen Teilnehmerstationen eine möglichst tiefe Trägerfrequenz benützt wird.

7. Verfahren nach Anspruch 5, **dadurch gekennzeichnet,** dass für die Übertragung der Nutzsignale zwischen zwei Teilnehmerstationen einer Kette eine möglichst hohe Trägerfrequenz verwendet wird.

8. Verfahren nach einem der Ansprüche 5 bis 7, **dadurch gekennzeichnet,** dass bei der Kanalsuche erforderlichenfalls mehrere die Verbindungsqualität bestimmende Empfangspegel verwendet werden.

9. Verfahren nach einem der vorhergehenden Ansprüche, **dadurch** **gekennzweichnet,** dass die Signalisierung zwischen den Teilnehmerstationen auf einem gemeinsamen Kanal erfolgt, dem eine besondere Trägerfrequenz zugeordnet wird.

10. Verfahren nach einem der vorhergehenden Ansprüche, **dadurch gekenn****zweichnet,** dass die Teilnehmerstationen sowohl sende- als auch empfangsseitig getrennt induktiv an eine gemeinsame Übertragungsleitung (L) angekoppelt werden.

11. Teilnehmerstation für eine nach dem Verfahren gemäss Anspruch 1 betriebene Nachrichtenübertragungsanlage, mit einem mit dem Sprechstromkreis (MI) verbundenen Sender (S), dessen Ausgang an den verwendeten Übertragungweg anschliessbar ist, und mit einem mit dem Hörstromkreis (HO) verbundenen Empfänger (NE), dessen Eingang an den verwendeten Übertragungsweg anschliessbar ist, **dadurch gekennzeichnet,** dass ein Zusatzempfänger (ZE) vorgesehen ist, dessen Eingang ebenfalls an den verwendeten Übertragungsweg anschliessbar ist und dessen Ausgang an ein zwischen dem Sprechkreis (MI) und dem Eingang des Senders (S) eingefügtes Additionsglied (SM) anschaltbar ist.

12. Teilnehmerstation nach Anspruch 11, **dadurch gekennzeichnet,** dass Empfänger (NE) und Zusatzempfänger (ZE) in ihrem Aufbau identisch sind.

13. Teilnehmerstation nach Anspruch 11 oder 12, **dadurch gekennzeichnet,** dass eine Hilfsschnittsstelle (IF) zur direkten Übertragung von Vermittlungsdaten zu anderen Teilnehmerstationen vorhanden ist.

## Claims

1. A method for the transmission of information between several user stations (A,B..), wherein the transmission of useful information between the user stations occurs by means of modulated carrier signals, characterised in that when constructing a connection for simultaneous communication between more than two user stations a transmission chain is formed consisting of the user stations (A,B,C...,KL) concerned, in which chain, with the exception of the first user station (A), the useful signal of the preceding user station is supplied to each user station (B,C,...KL), there added to the specific useful signal and the resulting sum signal is passed onto the next user station in the chain, in that the sum signal formed in the last user station (KL) of the chain is supplied to all user stations (A,B,C,...KL) involved in the connection, and in that for the transmission of the useful signals between the user stations and for the transmission of the sum signal supplied to all user stations one of the respective carrier frequencies available is used.

2. A method according to claim 1, characterised in that when constructing a simultaneous connection between more than two user stations, one portion (A,KL) of which belongs to a first transmission network and one portion (C,D) to a second transmission network, firstly in the network from which the multiple connection is constructed, a transmission chain consisting of the participant user stations (A,KL) of this network is formed in turn, wherein a user station as a network transition point (N) is inserted in addition into this chain, in that this additional user station is coupled to an additional user station of the other network, also provided as a network transition point (HKL), by connecting its receiver output to the transmitter input thereof and its transmitter input to the receiver output thereof and by way of a data connection (IF), in that with the user stations (C,D) of the second network involved in the connection a transmission chain containing the network transition point (HKL) is also formed.

3. Method according to claim 1 or 2, characterised in that in order to accommodate a user station (B) in a conference connection firstly a call-back connection to this user station (B) is constructed and then the user station (B) is inserted into the transmission chain between the user station (KL) calling-up the conference and the user station (A), lying in front of it in the transmission chain.

4. Method according to claim 1, 2 or 3, characterised in that in the user stations the addition of the useful signal received from the preceding user station and of the specific useful signal occurs in the base frequency band.

5. Method according to one of the preceding claims, characterised in that the selection of the carrier frequencies for the useful signal transmission occurs between the user stations, with consideration of the permissible line attenuation.

6. Method according to claim 5, characterised in that a carrier frequency which is as low as possible is used for the transmission of the sum signal, produced in the last user station of a chain, to all user stations.

7. Method according to claim 5, characterised in that a carrier frequency which is as high as possible is used for the transmission of the useful signals between two user stations of one chain.

8. Method according to one of claims 5 to 7, characterised in that if necessary when searching the channel, several receiver levels determining the connection quality are used.

9. Method according to one of the preceding claims, characterised in that the signalling between the user stations occurs on one common channel, to which is allocated a particular carrier frequency.

10. Method according to one of the preceding claims, characterised in that user stations are coupled on the transmitter side as well as on the receiver side separately in an inductive manner to a common transmission line (L).

11. User station for a unit for transmitting information, operated according to the method according to claim 1, with a transmitter (S) connected to the voice current circuit (MI), the output of which is able to be connected to the transmission path used, and with a receiver (NE) connected to the audio current circuit (HO), the input of which is able to be connected to the transmission path used, characterised in that an additional receiver (ZE) is provided, the input of which is also able to be connected to the transmission path used and the output of which is able to be connected to an additional element (SM) inserted between the voice circuit (MI) and the input of the transmitter (S).

12. User station according to claim 11, characterised in that receiver (NE) and the additional receiver (ZE) are identical in their construction.

13. User station according to claim 11 or claim 12, characterised in that an auxiliary interface (IF) is present for direct transmission of network data to other user stations.

## Revendications

1. Procédé de transmission de messages entre plusieurs postes (A, B ...) d'abonné, la transmission de l'information utile s'effectuant entre les postes d'abonné, au moyen de signaux porteurs modulés, caractérisé en ce que, lors de l'établissement d'une connexion, on forme, pour faire communiquer simultanément plus de deux postes d'abonné une chaîne de transmission constituée des postes (A, B, C, ..., KL) d'abonné intervenants, dans laquelle le signal utile du poste d'abonné précédent est envoyé à chaque poste (B, C, ..., KL) d'abonné, à l'exception du premier poste (A) d'abonné, y est additionné au signal utile propre à ce poste (B, C,..., KL) et le signal somme correspondant est retransmis au poste d'abonné suivant dans la chaîne, le signal somme apparaissant dans le dernier poste (KL) de la chaîne est envoyé à tous les postes (A, B, C, ... , KL) d'abonné participant à la connexion, et l'une des fréquences porteuses disponibles est utilisée pour transmettre les signaux utiles entre les postes d'abonné et les signaux somme envoyés à tous les postes d'abonné.

2. Procédé suivant la revendication 1, caractérisé en ce que, lors de l'établissement d'une connexion simultanée entre plus de deux postes d'abonné, dont une partie (A, KL) appartient à un premier réseau de transmission et dont une partie (C, D) appartient à un deuxième réseau de transmission, c'est d'abord dans le réseau, à partir duquel la connexion multiple a été établie, que l'on forme de nouveau la chaîne de transmission, constituée des postes (A, KL) d'abonné participants de ce réseau, un poste d'abonné étant inséré en plus dans cette chaîne, en tant que passerelle (N) interréseau, ce poste d'abonné supplémentaire est couplé à un poste d'abonné supplémentaire prévu également en tant que passerelle (HKL) interréseau de l'autre réseau, en connectant la sortie de récepteur de ce premier poste à l'entrée d'émetteur du deuxième poste, et en connectant l'entrée d'émetteur du premier poste à la sortie de récepteur du deuxième poste, ainsi que par l'intermédiaire d'une liaison (IF) de données, et l'on forme également une chaîne de transmission comprenant la passerelle (HKL) interréseau avec les postes (C, D) d'abonné du deuxième réseau, qui participent à la connexion.

3. Procédé suivant la revendication 1 ou 2, caractérisé en ce que, pour incorporer un poste (B) d'abonné dans un circuit de conférence, on établit d'abord une connexion de rétro-appel à ce poste (B) d'abonné, et ensuite on insère le poste (B) d'abonné dans la chaîne de transmission entre le poste (KL) d'abonné, qui convoque la conférence , et le poste (A) d'abonné, qui se trouve avant dans la chaîne de transmission.

4. Procédé suivant les revendications 1, 2 ou 3, caractérisé en ce que l'addition du signal utile reçu du poste d'abonné précédent et du signal utile propre s'effectue en bande de base dans les postes d'abonné.

5. Procédé suivant l'une des revendications précédentes, caractérisé en ce que, le choix des fréquences porteuses pour la transmission de signaux utiles entre les postes d'abonné s'effectue en tenant compte des pertes admissibles en ligne.

6. Procédé suivant la revendication 5, caractérisé en ce que pour transmettre le signal somme produit dans le dernier poste d'abonné d'une chaîne, à tous les postes d'abonné, on utilise une fréquence porteuse la plus basse possible.

7. Procédé suivant la revendication 5, caractérisé en ce que pour transmettre des signaux utiles entre deux postes d'abonné d'une chaîne, on utilise une fréquence porteuse la plus grande possible.

8. Procédé suivant l'une des revendications 5 à 7, caractérisé en ce que, lors de la recherche de canal, on utilise en cas de besoin plusieurs niveaux de réception, qui fixent la qualité de la connexion.

9. Procédé suivant l'une des revendications précédentes, caractérisé en ce que la signalisation entre les postes d'abonné s'effectue sur un canal commun, auquel est associée une fréquence porteuse particulière.

10. Procédé suivant l'une des revendications précédentes, caractérisé en ce que les postes d'abonné sont couplés à la fois du côté émetteur et du côté récepteur séparément et inductivement à une ligne (L) commune de transmission.

11. Poste d'abonné pour une installation de transmission d'informations fonctionnant suivant le procédé de la revendication 1, comportant un émetteur (S), qui est relié au circuit (MI) de diction, et dont la sortie peut être connectée à la voie de transmission utilisée, et un récepteur (NE), qui est relié à un circuit (HO) d'audition, et dont l'entrée peut être connectée à la voie de transmission utilisée, caractérisé en ce qu'il est prévu un récepteur (ZE) supplémentaire, dont l'entrée peut également être connectée à la voie de transmission utilisée, et dont la sortie peut être branchée à un circuit (SM) d'addition inséré entre le circuit (MI) de diction et l'entrée de l'émetteur (S).

12. Poste d'abonné suivant la revendication 11, caractérisé en ce que le récepteur (NE) et le récepteur (ZE) additionnel ont une structure identique.

13. Poste d'abonnés suivant la revendication 11 ou 12, caractérisé en ce qu'une interface (IF) auxiliaire est disponible pour transmettre directement des données de commutation à d'autres postes d'abonné.
